# FASCICULE DE BREVET EUROPEEN

(11) **EP 0 711 054 B1**
(45) Date de publication et mention de la délivrance du brevet: **12.09.2001**
(21) Numéro de dépôt: 95402364.4
(22) Date de dépôt: 24.10.1995
(51) Int. Cl.: H04L 12/56, H04Q 11/04

(54) **Procédé et dispositif de traduction d'en-têtes de cellule ATM**
Verfahren und Vorrichtung zur Kopfteilübersetzung von ATM-Zellen
Method and apparatus for header translation of ATM cells

(30) Priorité: 04.11.1994 FR 9413197
(43) Date de publication de la demande: 08.05.1996
(73) Titulaire: THOMSON-CSF, 75008 Paris (FR)
(72) Inventeur: Grenot, Thierry, F-92402 Courbevoie Cédex (FR); Conti, Dominique, F-92402 Courbevoie Cédex (FR); Tarbouriech, François, F-92402 Courbevoie Cédex (FR)
(74) Mandataire: Lincot, Georges

(56) Documents cités:
- US-A- 5 323 389
- IBM TECHNICAL DISCLOSURE BULLETIN, vol. 37, no. 4B, Avril 1994 ARMONK, pages 415-417, XP 000451298 'Asynchronous Transfer Mode Routing'

## Description

La présente invention concerne un procédé et un dispositif de traduction d'un en-tête de cellule appliquée à l'entrée d'un noeud d'un réseau asynchrone de transmission de données par paquets.

Elle s'applique notamment aux équipements de brassage et de commutation de données numériques composant un réseau fonctionnant dans le mode de transmission connu sous l'abréviation anglo-saxonne ATM de "Asynchronous Transfert Mode".

Le mode de transfert asynchrone ATM est principalement défini dans les recommandations de l'UIT-T (série I), ainsi que dans les travaux d'un groupement d'industriels ayant pris le nom de "ATM Forum".

Dans le mode de transfert asynchrone ATM les informations à transmettre sont regroupées sous forme de paquets de longueur 48 octets précédés d'un en-tête de 5 octets. L'ensemble en-tête plus données prend le nom de cellule. Dans son principe l'ATM fonctionne dans un mode connecté, c'est-à-dire qu'il nécessite d'établir un chemin dans le réseau de transmission avant de pouvoir émettre les données. Ce chemin est dénommé "circuit virtuel". Il y a en général de nombreux circuits virtuels qui empruntent la même connexion physique entre deux équipements ATM. L'en-tête des cellules a principalement pour rôle de permettre l'identification des circuits virtuels sur la liaison. Un exemple de mise en oeuvre d'un tel procédé est notamment connu de la demande de brevet français n° 2 681 164 déposée au nom de la Demanderesse.

Selon ce procédé chaque paquet de données à acheminer dans un réseau est composé d'une part, d'un en-tête permettant de l'identifier et de le guider à travers des canaux virtuels, et d'autre part, d'une partie contenant les informations à véhiculer. L'acheminement est assuré au niveau de chaque noeud du réseau en extrayant de l'en-tête l'adresse d'un mot contenu dans une première mémoire de contexte contenant les informations nécessaires à l'identification de l'en-tête et au guidage des données à véhiculer et en créant à partir du mot lu dans la première mémoire de contexte une nouvelle adresse. Cette nouvelle adresse sert de pointeur vers une zone d'une deuxième mémoire de contexte dans laquelle se trouve au moins une nouvelle en-tête et une information de direction sortante pour le ou les paquets sortant du noeud.

La fonction de traduction qui est ainsi réalisée permet d'associer à chaque en-tête de cellule, les informations lui permettant de subir les traitements auxquels elle est destinée. Le traducteur qui a la charge d'exécuter cette fonction sur chaque cellule qu'il reçoit doit typiquement fournir des informations sur la validité du conduit virtuel, la validité de la voie virtuelle, le comptage, la liste des directions sortantes sur lesquelles est émise la cellule reçue, le nouvel en-tête associé à la cellule lors de son émission etc... Le traducteur doit également exécuter les traitements correspondant au contexte défini précédemment pour chaque cellule. Ces traitements concernent notamment la commutation de conduit virtuel VP, la commutation de voie virtuelle VC, la commutation du conduit et de voie virtuelle VP/VC, l'extraction des flux de maintenance.

D'autres fonctions et traitements peuvent aussi être envisagés pour permettre l'identification de différents types de cellules: cellule libre, métasignalisation, diffusion générale, signalisation point à point, gestion des ressources, cellules non assignées etc... D'autre part, lors de la commutation d'une cellule et en fonction de la nature du commutateur, le traducteur doit pouvoir assurer une certaine transparence c'est-à-dire qu'il doit pouvoir reconduire dans l'en-tête de la cellule sortante certains champs de l'en-tête de la cellule entrante. C'est ainsi qu'il doit par exemple assurer une transparence au champ VCI d'identification d'une voie virtuelle lors d'une commutation de conduit virtuel, une transparence au champ CLP de priorité à la perte de cellule et une transparence du champ PTI relatif au contenu de la cellule.

Les traitements décrits précédemment doivent être relativement simples à réaliser. Leur programmation est faite en fonction des appels et de l'état du réseau sur une plage relativement grande des valeurs d'entrée et de sortie. Le temps de traitement est court et inférieur au temps de réception d'une cellule. Ce temps est de l'ordre de 12,3 µs à 34,368 Mbit/s, 2,7 µs à 155,52 Mbit/s et 680 ns à 622 Mbit/s.

Au plan structurel la fonction de traduction peut aussi être simplement réalisée à l'aide d'un plan de mémoire adressé par une unité de traitement microprogrammée.

La principale difficulté résulte cependant dans la nécessité qu'il y a de mettre en oeuvre un plan de mémoire de taille très importante, composé par exemple de 2³² mots de 16 bits et à l'organiser pour permettre l'exécution de la fonction de traduction précédemment décrite.

Le brevet US 5,323,389 divulgue un procédé permettant de « router » une cellule dans un réseau ATM. Il consiste à localiser une entrée dans une table de premier niveau correspondant à un champ VPI de la cellule , générer un premier signal qui correspond à l'entrée de la table, à localiser une entrée dans une table de deuxième niveau correspondant à une valeur d'un champ VCI de la cellule et du premier signal et à diriger la cellule vers la destination souhaitée. Lorsque la valeur VCI n'est pas comprise dans la gamme de valeurs souhaitées, le procédé génère un signal d'erreur. Le but de l'invention est de pallier les inconvénients précités.

A cet effet, l'invention a pour objet un procédé de traduction d'un en-tête de cellule appliquée à l'entrée d'un noeud d'un réseau asynchrone de transmission de données par paquets consistant à identifier, dans un espace mémoire du noeud, le circuit virtuel du réseau auquel appartient la cellule, à partir des numéros de conduit virtuel VPI et des numéros de voie virtuelle VCI contenus dans l'en-tête de la cellule. Il est caractérisé en ce qu'il comporte au moins les étapes suivantes :
- adresser l'espace mémoire du noeud à partir du numéro de conduit virtuel contenu dans l'en-tête de la cellule pour identifier dans ledit espace mémoire une première zone de contexte indiquant la plage des voies virtuelles utilisables pour ce conduit virtuel VPI,
- adresser une deuxième zone de contexte à partir d'un numéro de voie virtuelle VCI contenu dans l'en-tête de la cellule et d'une adresse de base lue dans ladite première zone de contexte, afin d'obtenir la liste des directions que doit prendre la cellule à la sortie du noeud, ainsi que le nouvel en-tête, le calcul de l'adresse de ladite deuxième zone comportant les étapes suivantes :
   - si le VCI est dans la plage des voies virtuelles utilisables pour ce conduit virtuel VPI, ajouter à l'adresse de base contenue dans la première zone de contexte le numéro de voie virtuelle VCI contenu dans l'en-tête de la cellule entrante,
   - si le VCI n'est pas dans la plage des voies virtuelles utilisables pour ce conduit virtuel VPI, ajouter à l'adresse de base contenue dans la première zone de contexte la valeur de VCI égale à zéro.

L'invention a également pour objet un dispositif pour la traduction d'un en-tête de cellule appliquée à l'entrée d'un noeud d'un réseau asynchrone de transmission de données par paquets comprenant un dispositif de calcul d'adresse couplé entre une première mémoire de contexte et une deuxième mémoire de contexte pour identifier le circuit virtuel du réseau auquel appartient la cellule à partir des numéros de conduit virtuel VPI et des numéros de voie virtuelle VCI contenus dans l'en-tête de la cellule, ladite première mémoire comportant des premières zones de contexte adressées par le numéro de conduit virtuel contenu dans l'en-tête de la cellule, la deuxième mémoire comportant des deuxième zone de contexte pour indiquer la liste des directions que doit prendre la cellule en sortie du noeud est caractérisé en ce qu'il comporte au moins :
- un circuit comparateur pour comparer le numéro de voie virtuel VCI de la cellule entrante à un nombre de voies disponibles indiqué dans la première zone de contexte, et
- un dispositif de calcul pour adresser la deuxième zone de contexte à partir d'une adresse de base lue dans la première zone de contexte et du numéro de voie VCI contenue dans l'en-tête de la cellule entrante.

Le procédé selon l'invention est utilisé pour aiguiller la cellule identifiée vers une direction différente de celles des autres cellules du même conduit virtuel pour un traitement spécifique.

D'autres caractéristiques et avantages de l'invention apparaîtront à l'aide de la description qui suit faite en regard des figures des dessins annexés qui représentent :
- La figure 1 un exemple de format d'une cellule ATM,
- Les figures 2 et 3 le format d'un en-tête de cellule ATM dans le cas d'une interface usager réseau et d'un interface de noeud de réseau,
- La figure 4 une illustration des étapes du procédé selon l'invention,
- La figure 5 un tableau résumant les actions de commutation de conduit et de voies virtuels,
- La figure 6 un mode de réalisation d'un dispositif de traduction pour la mise en oeuvre du procédé selon l'invention,
- La figure 7 un mode d'organisation de l'espace mémoire du traducteur selon l'invention,
- La figure 8 un exemple de formatage d'une première zone de contexte.
- La figure 9 un exemple de formatage d'une deuxième zone de contexte.
- La figure 10 un exemple de tableau d'extraction de cellules possibles.

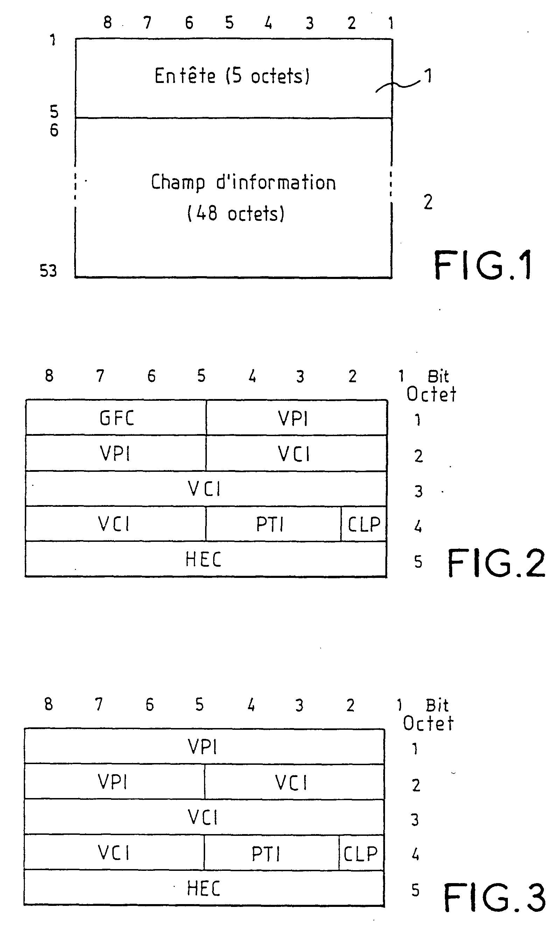

Le format d'une cellule ATM est rappelé à la figure 1. Il se compose d'un en-tête 1 codé sur 5 octets et d'un champ d'information 2 codé sur 48 octets. Le champ d'information 2 contient les données utiles à véhiculer. Deux formats d'en-tête sont considérés selon que les cellules transitent par un interface usager réseau ou un interface entre noeuds de réseau. Ces en-têtes sont représentés respectivement aux figures 2 et 3. Celles-ci comportent différents champs CLP, GFC, PTI, HEC, VCI et PTI qui ont les significations suivantes.

Le champ CLP est codé sur une longueur de 1 bit. Il indique que la cellule est ou non prioritaire à la perte de cellules en cas de congestion du réseau.

Le champ GFC est codé sur une longueur de 4 bits. Il permet, pour le cas seulement d'une cellule transitant sur un interface usager-réseau, un contrôle de flux entre un usager et le réseau. Ce champ peut également permettre le raccordement de plusieurs terminaux sur un même point d'interface.

Le champ PTI est codé sur une longueur de 3 bits. Ce champ permet d'identifier le conduit virtuel auquel appartient la cellule. Ce conduit regroupe plusieurs voies virtuelles (VC) pour permettre un traitement commun à l'ensemble de ces voies.

Le champ HEC est codé sur une longueur de 8 bits. Ce champ est un champ de contrôle qui permet la détection et parfois la correction d'erreur sur l'ensemble de la cellule.

Le champ VCI est codé sur une longueur de 16 bits. Ce champ identifie la voie virtuelle à laquelle appartient la cellule, dans le conduit virtuel VP indiqué.

Le champ PTI est codé sur une longueur de 3 bits. Ce champ indique le type de contenu (payload) de la cellule.

La fonction de traduction de l'en-tête réalisé par un équipement ATM a pour rôle d'associer à chaque en-tête d'une cellule, les informations lui permettant de subir les traitements auxquels elle est destinée et d'effectuer ces traitements.

Les informations que le traducteur doit typiquement fournir sont notamment des informations sur la validité du conduit et de la voie virtuelle, sur le comptage des cellules, la liste des directions sortantes sur lesquelles seront émises une cellule reçue, le nouvel en-tête associé à la cellule lors de son émission.

Pour simplifier l'exposé on suppose dans ce qui suit que le champ HEC est exploité en amont du traducteur et que seules les cellules ayant un en-tête réputé correct se présentent à l'entrée du traducteur.

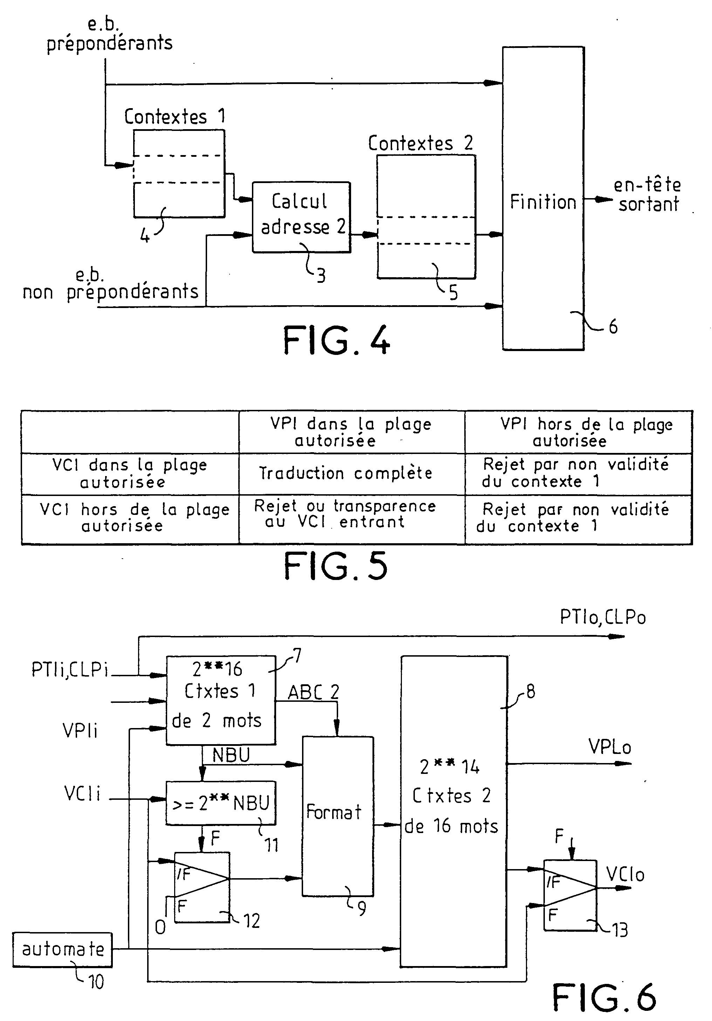

Les traitements correspondants sont réalisés selon l'invention en analysant comme l'indique la figure 4 l'en-tête en deux étapes. Selon une première étape, l'analyse a lieu en considérant les éléments binaires prépondérants dont la signification est quasiment toujours utilisée. Selon une deuxième étape, l'analyse a lieu sur les éléments binaires dont l'utilisation dépend du mode de fonctionnement.

L'association entre le résultat de la première analyse et l'entrée de la deuxième est réalisée par pointeur. L'intérêt est que cela permet par exemple, de ne pas analyser le champ VCI pour les conduits virtuels VP en mode commutation de conduit virtuel, ce qui conduit à une considérable économie de mémoire. Par rapport à ce qui est indiqué dans le procédé qui a fait l'objet de la demande de brevet précitée, l'amélioration apportée par l'invention consiste en ce que le type de commutation (VP, VC, VP/VC) n'est plus indiqué explicitement dans la première mémoire de contexte, mais implicitement par une information portant sur le "nombre de bits utiles du champ VCI".

Le dispositif représenté à la figure 4 comporte un dispositif de calcul d'adresse 3 couplé entre deux mémoires de contexte 4 et 5. Un dispositif dit de finition 6 est couplé à la sortie de la mémoire 5 pour réaliser une mise en forme de l'en-tête sortante.

La première mémoire de contexte 4 permet la réalisation de la première analyse. Cette mémoire 4 est adressée par les éléments binaires prépondérants. Elle comprend, un élément de validation du contexte, pour interdire les contextes non initialisés ou que l'organe de commande du commutateur aurait décidé de ne pas employer, un pointeur vers la zone de contexte 2 pour poursuivre l'analyse, et la plage VCI utilisée.

La deuxième mémoire de contexte 5 sert de support à la deuxième analyse. Cette mémoire est adressée par le dispositif de calcul d'adresse 3 à partir du pointeur issu de la première analyse et fourni par la première mémoire 4, et à partir d'une partie des éléments binaires résiduels de l'en-tête entrant qui dépend du nombre d'éléments binaires utiles fournis par la première analyse.

La mémoire 5 contient typiquement, un élément de validation du contexte, pour interdire les contextes du deuxième type non initialisés, ou que l'organe de commande du commutateur aurait décidé de ne pas employer, la liste des directions sortantes sur lesquelles la cellule entrante sera retransmise, le ou les en-têtes de la cellule sortante et éventuellement des compteurs de trafic, d'erreurs etc...

Le dispositif de calcul 3 a pour but d'exploiter le résultat de la première analyse pour en déduire une adresse dans la deuxième mémoire de contexte 5 à associer à la cellule entrante. Cette adresse est calculée en ajoutant au pointeur d'adresse lu dans la première mémoire de contexte 4 indiquant le déplacement de la zone des contextes du deuxième type associés au contexte du premier type, le champ VCI de l'en-tête entrant multiplié par la taille du contexte 2 compté en nombre de mots mémoire nécessaires pour ranger un contexte de deuxième type..

Ainsi, le Jème VC utilise le Jème contexte de deuxième type associé au contexte 1.

Dans ces conditions si le champ VCI de l'en-tête entrant est dans la plage indiquée dans la première mémoire de contexte 4 alors le VCI de l'en-tête entrant est utilisé pour le calcul de l'adresse dans la deuxième mémoire de contexte 5. Si non le calcul de l'adresse dans la mémoire 5 est effectué en prenant la valeur VCI = 0.

Le dispositif de finition 6 réalise la mise en forme de l'en-tête sortante, en fonction de la validité du contexte du deuxième type. Pour se faire la règle suivante est adoptée en considérant que si le champ VCI entrant n'est pas dans la plage indiquée dans le contexte du premier type alors le champ VCI de sortie est placé égal au champ VCI d'entrée. Dans le cas contraire le VCI de sortie est pris dans la deuxième mémoire de contexte 5.

L'énoncé des principes précédents permet d'envisager des modes commutation de conduit virtuel, de voie virtuelle, de conduit et de voie virtuels. Pour une commutation de conduit virtuel, il suffit d'indiquer que le nombre d'éléments binaires utiles du champ VCI est nul. Deux cas peuvent alors se présenter selon que le champ VCI est différent de zéro ou non.

Si le champ VCI n'est pas nul, le contenu de la mémoire 5 du deuxième contexte correspondant à la voie virtuelle VCI zéro du conduit virtuel VP considéré pour tous les champs VCI non nuls est utilisé, en appliquant une transparence pour le champ VCI entrant.

Si le champ VCI est nul, le deuxième contexte de la mémoire 5 correspondant à la voie virtuelle VC zéro est utilisé de façon normale. Dans ce cas le champ VCI après traduction peut être différent de zéro.

Dans ce mode de commutation de conduit virtuel (VP), des valeurs préassignées peuvent être données aux faibles valeurs du champ VCI de façon à signifier que pour un conduit virtuel VPI donné, les éléments binaires utiles sont tels que toutes les valeurs préassignées y figurent. Comme seuls peu de bits du champ VCI sont utilisés, cela conduit à ne consommer que très peu d'espace mémoire. Ceci permet d'obtenir une traduction complète pour ces cellules avec un traitement spécifique conduisant par exemple à un aiguillage vers un serveur.

Pour réaliser une commutation de voie virtuelle il suffit de positionner le même pointeur et donc les mêmes deuxièmes contextes dans tous les contextes du premier type qui correspondent à la plage de VPI autorisée (non analysée dans ce cas). Le nombre d'éléments binaires utiles du champ VCI est alors programmé en fonction de la plage VCI à traiter. Les cellules qui comportent des conduits virtuels VPI hors plage sont rejetées au niveau de la première mémoire de contexte 4. Les cellules comportant les voies virtuelles hors plage sont rejetées au niveau de la deuxième mémoire de contexte 5.

Pour réaliser une commutation de conduit et de voie virtuelle les champs VPI et VCI sont tous les deux utilisés afin d'identifier les voies virtuelles et leur associer un en-tête sortant. Pour chaque conduit virtuel VPI de la plage autorisé, il est défini une plage de voie virtuelle VCI associée, ainsi qu'un pointeur vers une zone de la deuxième mémoire de contexte 5. La deuxième mémoire de contexte 5 est pour cela fractionnée en autant de zones de contexte du deuxième type qu'il y a de pointeurs différents. La cohérence de cette partition est confiée à un dispositif de gestion de traduction non représenté. Un résumé des actions menées qui résultent du fait qu'un conduit virtuel VPI ou une voie virtuelle VCI se trouvent ou non dans les plages autorisées est consignée dans le tableau de la figure 5.

Il est ainsi possible de mixer les types de conduits (VD, VP/VC) et d'extraire les canaux logiques de faibles valeurs, tout en optimisant l'utilisation de la mémoire, ou encore, pour chaque VP, de mixer le mode VP et VC (soit avec ou sans différenciation du traitement selon la VCI) selon la valeur du champ VCI.

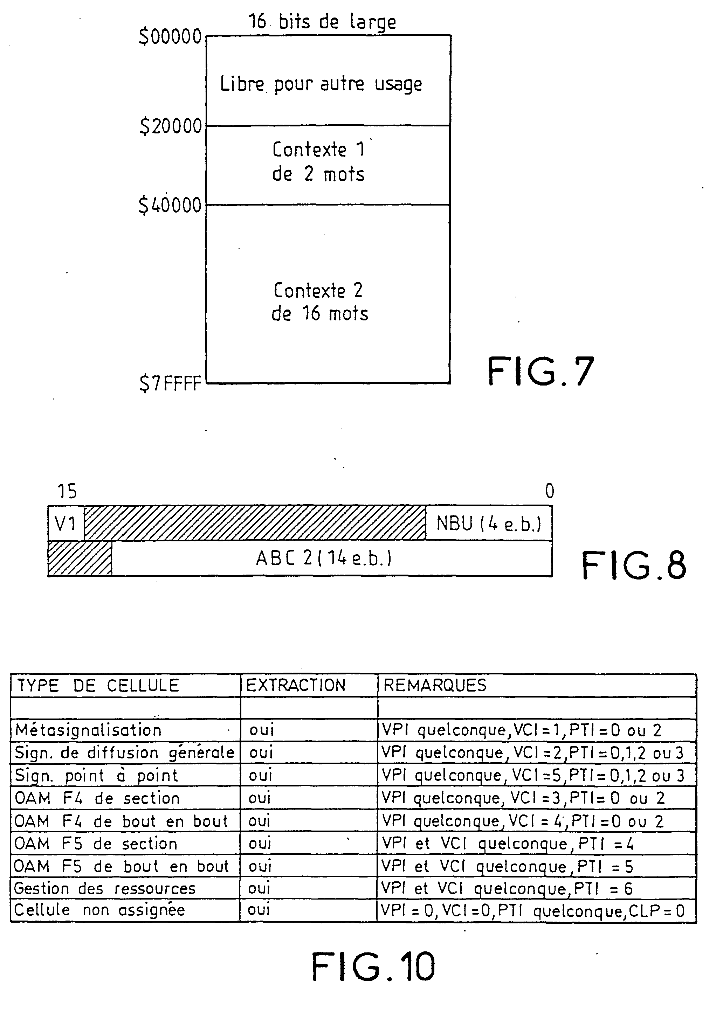

Le dispositif pour la mise en oeuvre du procédé selon l'invention qui est représenté à la figure 6, comporte, de manière similaire à la figure 4, une première mémoire de contexte 7 couplée à une deuxième mémoire de contexte 8 par l'intermédiaire d'un dispositif de calcul d'adresse 9. Bien que séparées sur la figure 6 les deux espaces formés par les mémoires 7 et 8 peuvent éventuellement être contenus dans une même mémoire physique de la façon représentée à la figure 7. Un automate programmé 10 permet la génération des adresses de poids faibles qui permettent l'exécution des opérations à l'intérieur des mémoires 7 et 8. Il permet la sélection des zones des mémoires 7 et 8 en fonction de la progression du processus de traduction. Le dispositif comporte également un comparateur 11 couplé entre les sorties de données de la mémoire 7 et un circuit multiplexeur 12, ainsi qu'un circuit multiplexeur couplé sur une sortie de données de la mémoire 8. Le comparateur 11 positionne un signal F à l'état vrai si la valeur 2^{VCI} est supérieure ou égale à la valeur 2^{NBU}, c'est-à-dire lorsque la valeur VCI n'est pas dans la plage autorisée. Le dispositif de calcul d'adresse 9 transforme les éléments binaires du pointeur lu dans la mémoire de contexte 7 en une adresse dans la mémoire 8. Cette transformation est réalisée par une addition d'une adresse de base ABC2 de contexte 2 au champ NBU peut ainsi être réalisée par un simple masquage des éléments binaires non utiles du champ VCI par les éléments binaires correspondant de l'adresse de base ABC2 en faisant l'hypothèse que le champ ABC2 pointe sur une adresse de type Kx2^{NBU}. S'il en était autrement, la partition de la mémoire entre les différentes zones de contexte 2 ne serait pas assurée.

Si le VCI entrant est dans la plage indiquée dans le contexte 1 le multiplieur 12 transmet cette valeur au dispositif de calcul d'adresse 9 sous l'action du signal F pour le calcul de l'adresse dans la mémoire 8 selon la relation (1). Dans le cas contraire le multiplexeur 12 transmet la valeur VCI = 0. Egalement le VCI entrant est transmis à la sortie du multiplexeur 13 si le VCI entrant est en dehors de la plage indiquée dans le contexte 1 ou le VCI obtenu en sortie de la mémoire 8 si le VCI entrant est dans la plage indiquée par la mémoire de contexte 8.

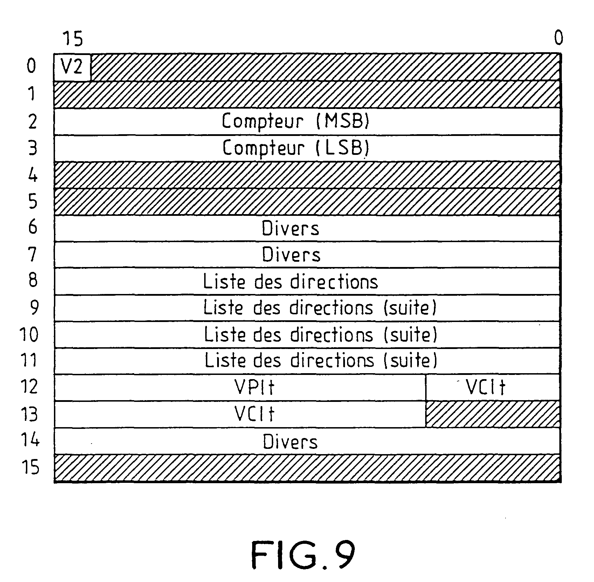

Un exemple de contenu des contextes 1 et 2 associés à chaque cellule est montré aux figures 8 et 9. Sur la figure 8 le contexte 1 est déterminé et adressé dans la mémoire 7 par les champs VP1, PTI et CLP de la cellule entrante. Le contexte 1 occupe un espace formé par deux mots mémoire de 16 bits. Ces mots se composent d'un champ V1 qui précise la validité du contexte 1, d'un champ NBU qui donne le nombre de bits utiles du champ VCI associé (la plage correspondante étant comprise entre 0 et 2^{NBU}-1), et d'un champ ABC2 qui donne l'adresse de base du contexte 2 correspondant dans la mémoire 8 à l'adresse de début de la zone réservée dans la mémoire 8 au contexte 2 et qui est attribué au contexte 1. Sur la figure 9 le contexte 2 occupe dans la mémoire 8 un espace formé par 16 mots de 16 bits. L'adressage des zones mémoire d'un contexte 2 associé à un contexte 1 est déterminé par l'adresse de base ABC2 du contexte 1 et par les mots d'adresse VCI ou 0 fourni par la sortie du multiplexeur 12 en fonction du nombre de bits utiles NBU. Les mots du contexte 2 se composent d'un champ V2 qui précise la validité du contexte 2, d'un champ COMPTEUR qui représente un compteur d'utilisation du contexte 2, de plusieurs champs de 16 bits formant une LISTE des DIRECTIONS qui donne les directions que la cellule doit emprunter, de champs VPIT et VCIT qui représentent les valeurs des champs VPI et VCI de la cellule sortante. Des champs DIVERS peuvent être utilisés pour d'autres fins.

L'architecture du traducteur qui vient d'être décrite permet d'obtenir un mode de commutation de conduits virtuels sur toute la plage codée sur 12 bits des VPI et un mode de commutation de voies virtuelles jusqu'à concurrence de 2¹⁴ voies avec la contrainte d'avoir 2ⁱ voies possibles par VPI. Elle répond notamment entièrement aux exigences de la recommandation UIT.1.361 concernant les capacités d'extraction des différentes valeurs citées dans cette recommandation notamment pour les VP utilisés en mode VP (sans traduction des VC). Les principales possibilités d'extraction sont résumées dans le tableau de la figure 10.

## Revendications

1. Procédé de traduction d'un en-tête de cellule appliquée à l'entrée d'un noeud d'un réseau asynchrone de transmission de données par paquets consistant à identifier, dans un espace mémoire (4, 5; 7, 8) du noeud, le circuit virtuel du réseau auquel appartient la cellule, à partir des numéros de conduit virtuel VPI et des numéros de voie virtuelle VCI contenus dans l'en-tête de la cellule, **caractérisé en ce qu'**il comporte au moins les étapes suivantes :
• adresser l'espace mémoire du noeud à partir du numéro de conduit virtuel contenu dans l'en-tête de la cellule pour identifier dans ledit espace mémoire une première zone de contexte (4; 7) indiquant la plage des voies virtuelles utilisables pour ce conduit virtuel VPI,
• adresser une deuxième zone de contexte (5; 8) à partir d'un numéro de voie virtuelle VCI contenu dans l'en-tête de la cellule et d'une adresse de base lue dans ladite première zone de contexte, afin d'obtenir la liste des directions que doit prendre la cellule à la sortie du noeud, ainsi que le nouvel en-tête, le calcul de l'adresse de ladite deuxième zone comportant les étapes suivantes :
• si le VCI est dans la plage des voies virtuelles utilisables pour ce conduit virtuel VPI, ajouter à l'adresse de base contenue dans la première zone de contexte le numéro de voie virtuelle VCI contenu dans l'en-tête de la cellule entrante,
• si le VCI n'est pas dans la plage des voies virtuelles utilisables pour ce conduit virtuel VPI, ajouter à l'adresse de base contenue dans la première zone de contexte la valeur de VCI égale à zéro.

2. Procédé selon la revendication 1 **caractérisé en ce qu'**il consiste à inscrire dans l'en-tête de la cellule sortante du noeud un numéro de voie virtuelle égal au numéro de voie virtuel de la cellule entrante à l'entrée du noeud lorsque le numéro de voie virtuelle de la cellule entrante dépasse la plage des voies virtuelles utilisables.

3. Dispositif pour la traduction d'un en-tête de cellule appliquée à l'entrée d'un noeud d'un réseau asynchrone de transmission de données par paquets comprenant un dispositif de calcul d'adresse (6) couplé entre une première mémoire de contexte (7) et une deuxième mémoire de contexte (8) pour identifier le circuit virtuel du réseau auquel appartient la cellule à partir des numéros de conduit virtuel VPI et des numéros de voie virtuelle VCI contenus dans l'en-tête de la cellule, ladite première mémoire (7) comportant des premières zones de contexte adressées par le numéro de conduit virtuel contenu dans l'en-tête de la cellule, la deuxième mémoire (8) comportant des deuxième zone de contexte pour indiquer la liste des directions que doit prendre la cellule en sortie du noeud **caractérisé en ce qu'**il comporte au moins :
• un circuit comparateur (11) pour comparer le numéro de voie virtuel VCI de la cellule entrante à un nombre de voies disponibles indiqué dans la première zone de contexte, et
• un dispositif de calcul (9) pour adresser la deuxième zone de contexte à partir d'une adresse de base lue dans la première zone de contexte et du numéro de voie VCI contenue dans l'en-tête de la cellule entrante.

4. Dispositif selon la revendication 3 **caractérisé en ce qu'**il comprend un premier multiplexeur (12) commandé par le circuit comparateur (11) pour placer la valeur du numéro de voie virtuelle à zéro pour le calcul de l'adresse de la deuxième zone de contexte.

5. Dispositif selon la revendication 4 **caractérisé en ce qu'**il comprend un deuxième multiplexeur (13) couplé par une première entrée à la sortie de la deuxième mémoire (8) et recevant sur sa deuxième entrée le numéro de voie virtuelle VCI pour transmettre le numéro de canal virtuel VCI de la cellule sortante du noeud.

6. Dispositif selon l'une quelconque des revendications 1 à 5 **caractérisé en ce que** la première zone de contexte comporte un premier champ de données pour préciser la validité de la première zone de contexte, un deuxième champ pour préciser le nombre de bits utiles du champ VCI de la voie virtuelle associée et un troisième champ ABC2 contenant l'adresse de base de la deuxième zone de contexte.

7. Dispositif selon la revendication 6 **caractérisé en ce que** la deuxième zone de context comporte un premier champ de données pour préciser la validité de la deuxième zone de contexte, des deuxièmes champs « COMPTEUR » pour compter l'utilisation de la deuxième zone de contexte, des troisièmes champs « LISTE des DIRECTIONS » pour donner les directions que la cellule doit emprunter, des quatrième et cinquième champs VPIt, VCIt représentant les valeurs des champs VPI et VCI à la sortie de la cellule.

8. Utilisation du procédé de traduction selon la revendication 1 pour aiguiller la cellule identifiée vers une direction différente de celles des autres cellules du même conduit virtuel pour un traitement spécifique.

## Claims

1. Method for translating a header of a cell applied to the input of a node of an asynchronous packet data transmission network consisting in identifying, in a memory space (4, 5; 7, 8) of the node, the virtual circuit of the network to which the cell belongs, on the basis of the virtual path indices VPI and of the virtual channel indices VCI contained in the header of the cell, **characterized in that** it comprises at least the following steps:
• addressing the memory space of the node on the basis of the virtual channel index contained in the header of the cell so as to identify in the said memory space a first context zone (4; 7) indicating the range of the useable virtual channels in respect of this virtual path VPI,
• addressing a second context zone (5; 8) on the basis of a virtual channel index VCI contained in the header of the cell and of a base address read from the said first context zone, so as to obtain the list of directions which the cell is to take on exiting the node, as well as the new header, the computation of the address of the said second zone comprising the following steps:
• if the VCI is in the range of the useable virtual channels in respect of this virtual path VPI, adding the virtual channel index VCI contained in the header of the incoming cell to the base address contained in the first context zone,
• if the VCI is not in the range of the useable virtual channels in respect of this virtual path VPI, adding the value of VCI equal to zero to the base address contained in the first context zone.

2. Method according to Claim 1, **characterized in that** it consists in recording in the header of the outgoing cell exiting the node a virtual channel index equal to the virtual channel index of the incoming cell entering the node when the virtual channel index of the incoming cell exceeds the range of the useable virtual channels.

3. Device for translating a header of a cell applied to the input of a node of an asynchronous packet data transmission network comprising an address computation device (6) coupled between a first context memory (7) and a second context memory (8) so as to identify the virtual circuit of the network to which the cell belongs on the basis of the virtual path indices VPI and of the virtual channel indices VCI contained in the header of the cell, the said first memory (7) comprising first context zones addressed by the virtual path index contained in the header of the cell, the second memory (8) comprising second context zones for indicating the list of directions which the cell is to take on exiting the node, **characterized in that** it comprises at least:
• a comparator circuit (11) for comparing the virtual channel index VCI of the incoming cell to a number of available channels which is indicated in the first context zone, and
• a computation device (9) for addressing the second context zone using a base address read from the first context zone and using the channel index VCI contained in the header of the incoming cell.

4. Device according to Claim 3, **characterized in that** it comprises a first multiplexer (12) controlled by the comparator circuit (11) so as to set the value of the virtual channel index to zero for the computation of the address of the second context zone.

5. Device according to Claim 4, **characterized in that** it comprises a second multiplexer (13) coupled by a first input to the output of the second memory (8) and receiving on its second input the virtual channel index VCI so as to transmit the virtual channel index VCI of the outgoing cell exiting the node.

6. Device according to any one of Claims 1 to 5, **characterized in that** the first context zone comprises a first data field for specifying the validity of the first context zone, a second field for specifying the number of useful bits of the VCI field of the associated virtual channel and a third field ABC2 containing the base address of the second context zone.

7. Device according to Claim 6, **characterized in that** the second context zone comprises a first data field for specifying the validity of the second context zone, second "COUNTER" fields for counting the use of the second context zone, third "LIST of DIRECTIONS" fields for giving the directions which the cell is to follow, fourth and fifth fields VPIt, VCIt representing the values of the fields VPI and VCI on exit from the cell.

8. Use of the translation method according to Claim 1 to route the identified cell in a direction different from those of the other cells of the same virtual path, for specific processing.

## Patentansprüche

1. Verfahren zur Übersetzung eines Vorspanns einer Zelle, die an den Eingang eines Knotens eines asynchronen Netzes zur Übertragung von Daten in Paketen angelegt wird, wobei in einem Speicherraum (4, 5; 7, 8) des Knotens das virtuelle Schaltorgan des Netzes, zu dem die Zelle gehört, ausgehend von den Nummern des virtuellen Bündels VPI und den Nummern des virtuellen Kanals VCI identifiziert wird, die im Vorspann der Zelle enthalten sind, **dadurch gekennzeichnet, daß** das Verfahren mindestens die folgenden Verfahrensschritte aufweist:
• Der Speicherraum des Knotens wird ausgehend von der im Vorspann der Zelle enthaltenen Nummer des virtuellen Bündels adressiert, um in dem Speicherraum eine erste Kontextzone (4; 7) zu identifizieren, die den Bereich der nutzbaren virtuellen Kanäle für dieses virtuelle Bündel VPI angibt;
• eine zweite Kontextzone (4; 8) wird ausgehend von einer im Vorspann der Zelle enthaltenen Nummer eines virtuellen Bündels und von einer Basisadresse adressiert, die aus der ersten Kontextzone gelesen wird, um die Liste der Richtungen, in die die Zelle am Ausgang des Knotens weitergeschickt werden soll, sowie den neuen Vorspann zu erhalten, wobei die Berechnung der Adresse dieser zweiten Zone folgende Schritte enthält:
• Befindet sich der Kanal VCI im Bereich der für dieses virtuelle Bündel VPI nutzbaren Kanäle, dann wird zur in der ersten Kontextzone enthaltenen Basisadresse die im Vorspann der ankommenden Zelle enthaltene Nummer VCI des virtuellen Kanals hinzugefügt;
• befindet sich der Kanal VCI nicht im Bereich der für dieses virtuelle Bündel VPI nutzbaren virtuellen Kanäle, dann wird zu der in der ersten Kontextzone enthaltenen Basisadresse der VCI-Wert null hinzugefügt.

2. Verfahren nach Anspruch 1, **dadurch gekennzeichnet, daß** es darin besteht, in den Vorspann der vom Knoten ausgehenden Zelle eine Nummer eines virtuellen Kanals gleich der Nummer des virtuellen Kanals der ankommenden Zelle einzutragen, wenn die Nummer des virtuellen Kanals der ankommenden Zelle den Bereich der nutzbaren virtuellen Kanäle überschreitet.

3. Vorrichtung zur Übersetzung eines Vorspanns einer am Eingang eines Knotens in einem asynchronen Netz zur Datenübertragung in Form von Paketen ankommenden Zelle, mit einer Adressen-Berechnungsvorrichtung (6), die zwischen einem ersten Kontextspeicher (7) und einem zweiten Kontextspeicher (8) eingefügt ist, um das virtuelle Schaltkreis des Netzes zu identifizieren, zu dem die Zelle gehört, ausgehend von den Nummern des virtuellen Bündels VPI und den Nummern des virtuellen Kanals VCI, die im Vorspann der Zelle enthalten sind, wobei der erste Speicher erste Kontextzonen enthält, die durch die im Vorspann der Zelle enthaltene Nummer des virtuellen Bündels adressiert werden, und der zweite Speicher (8) zweite Kontextzonen enthält, um die Liste der Richtungen anzugeben, in die die Zelle am Ausgang des Knotens weiterübertragen werden soll, **dadurch gekennzeichnet, daß** die Vorrichtung mindestens enthält:
• eine Komparatorschaltung (11), um die Nummer des virtuellen Kanals VCI der ankommenden Zelle mit einer Anzahl von verfügbaren Kanälen zu vergleichen, die in der ersten Kontextzone angegeben ist,
• und eine Berechnungsvorrichtung (9), um die zweite Kontextzone ausgehend von einer Basisadresse, die aus der ersten Kontextzone gelesen wird, und von der im Vorspann der ankommenden Zelle enthaltenen Kanalnummer VCI zu adressieren.

4. Vorrichtung nach Anspruch 3, **dadurch gekennzeichnet, daß** sie einen ersten Multiplexer (12) enthält, der von der Komparatorschaltung (11) gesteuert wird, um den Wert der Nummer des virtuellen Kanals für die Berechnung der Adresse der zweiten Kontextzone auf null zu setzen.

5. Vorrichtung nach Anspruch 4, **dadurch gekennzeichnet, daß** sie einen zweiten Multiplexer (13) enthält, der mit einem ersten Eingang an den Ausgang des zweiten Speichers (8) angeschlossen ist und an seinem zweiten Eingang die Nummer des virtuellen Kanals VCI empfängt und die Nummer des virtuellen Kanals VCI der vom Knoten weitergereichten Zelle überträgt.

6. Vorrichtung nach einem beliebigen der Ansprüche 1 bis 5, **dadurch gekennzeichnet, daß** die erste Kontextzone ein erstes Datenfeld zur Angabe der Gültigkeit der ersten Kontextzone, ein zweites Datenfeld zur Angabe der Anzahl von Nutzbits im Feld VCI des zugeordneten virtuellen Kanals und ein drittes Feld ABC2 mit der Basisadresse der zweiten Kontextzone enthält.

7. Vorrichtung nach Anspruch 6, **dadurch gekennzeichnet, daß** die zweite Kontextzone ein erstes Datenfeld zur Angabe der Gültigkeit der zweiten Kontextzone, zweite Datenfelder ZÄHLER zum Zählen der Nutzung der zweiten Kontextzone, dritte Felder LISTE DER RICHTUNGEN zur Angabe der Richtungen, in die die Zelle ausgangsseitig weitergereicht werden soll, und vierte und fünfte Felder VPlt, VClt enthält, die die Werte der Felder VPI, VCI am Ausgang der Zelle darstellen.

8. Verwendung des Übersetzungsverfahren nach Anspruch 1 zur Weiterleitung der identifizierten Zelle in eine andere Richtung als die der anderen Zellen desselben virtuellen Bündels für eine spezifische Verarbeitung.
